# NOUVEAU FASCICULE DE BREVET EUROPEEN

(11) **EP 2 059 641 B3**
(45) Date de publication du présent fascicule: **01.04.2026**
(45) Mention de la délivrance du brevet: 08.10.2014
(21) Numéro de dépôt: 07823465.5
(22) Date de dépôt: 31.08.2007
(51) Int. Cl.: E04C 2/292, B32B 15/08, B32B 3/12, B32B 5/18, E04D 3/35, E04B 1/90, E04B 1/94, E04B 1/76

(54) **MATERIAU DE REVETEMENT DE BATIMENT, ISOLANT THERMIQUE ET DE PREFERENCE EGALEMENT PHONIQUE**
WÄRME- UND VORZUGSWEISE AUCH SCHALLDÄMMENDES VERKLEIDUNGSMATERIAL FÜR DEN BAU
BUILDING CLADDING MATERIAL ACTING AS THERMAL AND ALSO PREFERABLY SOUND INSULATOR

(30) Priorité: 31.08.2006 FR 0607655; 27.10.2006 FR 0609468; 04.05.2007 FR 0703250
(43) Date de publication de la demande: 20.05.2009
(73) Titulaire: TDI Isolation Antilles, 97190 Le Gosier (FR)
(72) Inventeur: THOMAS, Vincent, 97190 LE GOSIER (GP)
(74) Mandataire: Gauchet, Fabien Roland
(86) Numéro de dépôt international: PCT/FR2007/001420
(87) Numéro de publication internationale: WO 2008/025903

(56) Documents cités:
- EP-A1- 0 718 447
- EP-A1- 1 626 133
- EP-A2- 1 624 121
- WO-A1-03/000494
- WO-A1-03/047850
- WO-A1-2005/003485
- DE-A1- 10 036 730
- DE-A1- 19 508 335
- DE-A1- 19 957 279
- DE-U1- 8 802 006
- FR-A1- 2 805 295
- GB-A- 2 348 850
- GB-A- 2 376 206
- US-A- 4 503 106
- US-A1- 2001 011 832
- US-A1- 2003 124 315

## Description

La présente invention concerne un matériau de revêtement de bâtiment, isolant thermique et, de préférence également phonique. Elle concerne encore plus particulièrement un matériau de revêtement pour toiture de bâtiment.

Les toitures de bâtiment sont généralement constituées soit de matériaux comme les tuiles, l'ardoise ou encore le chaume soit de panneaux en métal. Ainsi, dans des régions où des cyclones ou ouragans risquent d'intervenir relativement fréquemment, comme notamment aux Antilles, les habitants ont pris l'habitude de réaliser la toiture de leur maison en tôle métallique, ou en une autre matière, à la place des tuiles fragiles et relativement onéreuses à remplacer après le passage de vents violents.

Toutefois, une simple toiture en tôle métallique présente de nombreux inconvénients. En effet lors d'averses violentes de pluie ou de grêle, une telle toiture occasionne une nuisance sonore assez importante. De plus, dans des régions très ensoleillées, une telle toiture en tôle métallique ne joue aucun rôle d'isolant thermique bien au contraire.

Il est alors nécessaire de prévoir une isolation thermique classique en plus de cette toiture. Toutefois comme déjà évoqué, les risques d'endommagement de ces toitures et donc les risques de détériorations des isolations qui s'ensuivent lors de la dégradation de de ces toitures, n'incitent pas les utilisateurs à pratiquer de tels travaux.

En tant que matériau isolant phonique et thermique, on connaît des matériaux à base nappes de films à bulles d'air.

Ainsi, on connaît par EP-A-0 718 447, un matériau isolant comportant un assemblage formé d'au moins deux films de matière synthétique renfermant des bulles d'air rendus uniformément solidaires au niveau de l'une de leur face respective par un procédé de chauffage emprisonnant une couche de mousse de polyéthylène entre chacun desdits films. Toutefois, les caractéristiques d'isolation phonique et thermique d'un tel matériau se sont révélées insuffisantes lors de tests.

De même, dans EP 1 626 133, on propose également un isolant multicouche combinant à la fois les effets bénéfiques de la mousse de polyéthylène et des films à bulles d'air sur l'isolation phonique et thermique avec l'utilisation d'au moins quatre films d'aluminium pour une résistance accrue au feu ainsi qu'au rayonnement infrarouge. Cet isolant comporte deux feuilles d'aluminium sur ses faces extérieures, au moins trois couches isolantes incluant au moins un film à bulles d'air et au moins une mousse plastique et au moins deux feuilles d'aluminium intérieures soudées ou encollées de façon homogène sur toute leur surface. Un tel isolant constitué également un matériau d'isolation classique éventuellement rapportable sous une toiture constituée de tôle.

Dans GB 2 348 850 est également décrit un matériau isolant de type classique. Ce matériau isolant thermique et acoustique comprend des surfaces extérieures faites de couches continues d'aluminium soudées à chaud sur la surface externe d'une feuille de film de matière synthétique contenant des bulles. Au moins une couche de mousse anti-feu en matière synthétique est interposée entre les surfaces internes des feuilles de film à bulle et est jointe aux feuilles de film à bulles par des lignes de soudage longitudinales. Des feuillets d'air existent entre les surfaces internes des films à bulles et la couche de mousse.

Le document FR 2 805 295 décrit quant à lui, un isolant acoustique et thermique constitué d'au moins une couche de film à bulles (a), qui est généralement du polyéthylène ignifugé, d'au moins deux couches comportant de l'aluminium (b) et disposées sur les faces extérieures du matériau isolant et d'au moins deux couches aux propriétés isolantes acoustiques lesquelles sont disposées entre les couches (a) et (b).

Dans US 2003/124315, on propose un rouleau d'isolation comprenant une couche d'isolation comprise entre deux couches étanches à l'humidité dont une porte une couche réfléchissante sur la face opposée à celle portant la couche d'isolation. La couche réfléchissante peut être en aluminium ou en matériau non métallique pour augmenter la durée et la flexibilité du rouleau d'isolation. La couche d'isolation peut être une feuille plane de matière plastique ou synthétique réalisée (par exemple en polyéthylène à faible densité, en mousse de polyéthylène à cellules fermées, en polyester ou un autre matériau...), ou un film à bulles d'air ou plusieurs feuilles fixées entre elles. La disposition de cette couche permet la formation de bulles d'air. Les couches étanches à l'humidité sont réalisées en plastique fin flexible comme le polyéthylène, le nylon, le polyester...Ces couches sont laminées sur chaque face de la couche d'isolation par des adhésifs, la chaleur ou d'autres procédés connus de l'homme du métier. La couche extérieure de ce rouleau d'isolation est constituée d'une tôle métallique flexible telle qu'une feuille d'aluminium mais la couche d'isolant thermique n'est pas fixée directement sur elle, il existe en effet une couche étanche à l'humidité entre les deux. Un tel matériau d'isolation et en particulier utilisé autour des canalisations chaudes pour éviter la perte thermique.

Des travaux d'isolation d'une toiture en tôle, réalisés à l'aide des matériaux isolants décrits dans ces documents, comme déjà évoqué précédemment, ne sont pas fait puisque les risques d'endommagement de ces toitures et donc les risques de détériorations des isolations qui s'ensuivent lors de la dégradation de ces toitures, n'incitent pas les utilisateurs à pratiquer de tels travaux.

En outre, de tels matériaux doivent obligatoirement être installés sous la couverture en tôle et il subsiste toujours des endroits moins protégés que d'autres, la fixation tôle/nappe de film à bulles d'air étant difficile.

Dans GB 2376206 sont décrites des feuilles de revêtement des parois d'un mur à vide d'air de manière à améliorer ses caractéristiques d'isolation. Une feuille peut être constituée de bulles d'air et être fixée à une feuille métallique.

On connaît d'autres matériaux d'isolation qui sont utilisés plus particulièrement dans le domaine industriel et dans l'industrie automobile. Ainsi, le document US 2001/0011832 décrit une plaque composite dont le cœur est en mousse et utilisée pour former la paroi ou une porte d'un véhicule. Ce matériau se compose comme suit : une enveloppe extérieure métallique (aluminium ou acier), une couche adhésive flexible, un cœur élastique de mousse plastique thermique pouvant contenir des bulles d'air, une couche adhésive flexible, une enveloppe extérieure métallique (aluminium ou acier).

Dans DE 19508335 est décrit un matériau isolant résistant aux écarts de température ayant de bonnes propriétés isolantes thermiques et acoustiques. Ce matériau est flexible, recyclable et approprié pour résister à de fortes chaleurs pour pouvoir être utilisable en tant que panneau de protection thermique dans les véhicules automobiles. Dans une forme de réalisation, il est constitué d'une feuille de métal inférieure et supérieure avec un matelas de fibres métalliques en tant que couche intermédiaire présentant d'autres avantages.

Ces matériaux d'isolation présentent des caractéristiques propres à leur utilisation dans les milieux industriel et automobile.

Aucun des documents présentés ne propose un matériau de revêtement tel qu'une tôle et présentant des caractéristiques d'isolation thermique et/ou phonique.

Dans le document WO 2005/003485, on a proposé un élément de tôle préfabriqué pour réaliser des auvents, constitué d'une feuille de métal profilé, cannelée, nervurée à laquelle est appliquée au-dessous cette feuille de métal fine qui y est fixée dans les zones horizontales par un adhésif, par soudage si la feuille mince est en métal (par exemple en aluminium), ou par scellage si elle est en plastique (par exemple polyéthylène). La forme de la feuille de métal profilé crée des canaux permettant la circulation et des échanges d'air refroidissant ainsi la feuille de métal. La chaleur rayonnante émise par la feuille de métal est « criblée » par la feuille mince qui peut être dans un matériau réflectif des rayons infrarouges ou être revêtue de vernis ou de peinture ayant de telles propriétés. Toutefois, on peut comprendre que les canaux d'air circulants ainsi ménagés ne peuvent fonctionner que si l'air circule. Par conséquent pour une réalisation tel qu'un auvent cela est possible, si les extrémités de canaux sont ouvertes et la toiture uniquement constituée d'un pan incliné, ce qui revient à dire qu'un toit plat constitué d'un tel élément de couverture ne remplit pas sa fonction. De plus, on ne voit pas comment une simple feuille de plastique peut servir de matériau isolant phonique.

Dans le document DE8802006.1, on décrit un élément de couverture de toiture ou de mur constitué d'une plaque d'acier avec des rainures formant des trapèzes et destiné à l'isolation et la protection d'une toiture ou d'un mur. Cet élément est constitué d'une couche isolante sur laquelle est adjointe une couche de support protection contre l'incendie. La couche isolante est elle-même posée de manière amovible sur la plaque d'acier à rainure. Les couches isolante et anti-feu ne sont pas continues et sont constituées par des éléments emboîtables avec des plis à cran, des surfaces de contact et des surfaces de placement. Un tel élément présente des caractéristiques d'isolation alliées à une tôle de revêtement mais on se trouve en présence de deux matériaux l'un la tôle et l'autre isolant à assembler.

Le document WO 03/047850 décrit quant à lui un film multicouches destiné à une utilisation dans le bâtiment en tant que film pour arrêter la vapeur/buée/fumée et qui peut être enduit ou revêtu notamment par un toit à profilé en trapèze. Ce film peut être revêtu de matériaux habituels de construction sans prétraitement par exemple pour la mise en place sous un toit à profilé trapèze en acier.

Par conséquent, on en déduit qu'un besoin existe de proposer un matériau de revêtement tel qu'une tôle de revêtement de bâtiment, en particulier pour toiture, bardage, qui se présente sous la forme d'un matériau composite et qui constitue en soi un matériau au moins isolant thermique, facile à mettre en œuvre et ne nécessitant pas d'autres opérations que celle visant à l'installer sur le bâtiment et offrant toutes les caractéristiques requises d'isolation thermique mais éventuellement en outre phoniques.

A cet effet, l'invention a donc pour objet un matériau de revêtement de bâtiment, au moins isolant thermique se présentant sous la forme d'un matériau composite, selon la revendication 1.

De manière très avantageuse, on propose donc ainsi un matériau de revêtement composite, constitué d'une couche extérieure, une tôle, sur laquelle est fixée au moins une couche d'un composant isolant thermique formant la couche intérieure dudit matériau composite. Un tel matériau composite est donc directement prêt à l'emploi comme peut l'être un revêtement en tôle mais comporte en outre en soi des qualités d'isolation thermique et ne nécessite donc plus de travaux complémentaires d'isolation comme cela était le cas au préalable.

On entend par tôle toute plaque métallique ou en matière synthétique, présentant des ondulations ou nervures de toutes formes.

Selon une première forme de réalisation non comprise dans la portée des revendications, le composant isolant thermique est constitué d'au moins une nappe de film en matière synthétique à bulles d'air et d'une couche continue d'aluminium, soudée à chaud dessus, la nappe de film en matière synthétique à bulles étant interposée entre la tôle en tant que couche extérieure et la couche continue d'aluminium en tant que couche intérieure du matériau.

Selon une variante de cette forme de réalisation, ledit matériau de revêtement constitue de plus, en soi également, un isolant phonique, le composant isolant thermique comportant en outre une mousse en matière synthétique à cellules fermées de sorte que celle-ci est interposée entre la tôle et au moins une nappe de film en matière synthétique à bulles d'air.

De manière à présenter des qualités d'isolation thermique améliorées, on peut prévoir au moins deux nappes de film en matière synthétique à bulles d'air entre lesquelles est insérée une couche continue d'aluminium. De même, on peut faire varier l'épaisseur de telles nappes et des couches d'aluminium. De préférence, ces couches d'aluminium sont polies sur une face et laquées sur l'autre face pour les protéger de la corrosion. Ainsi, entre deux nappes de film en matière synthétique à bulles d'air successives est prévue une couche d'aluminium.

De préférence, la mousse à cellules fermées est une mousse de polyéthylène de densité supérieure ou égale à 35 kg/m³. De manière avantageuse, la mousse à cellules fermées permet d'absorber une partie des bruits d'impacts de la pluie tombant sur la tôle et donc d'atténuer ainsi leur incidence à l'intérieur d'un bâtiment.

En outre, cette mousse est choisie de préférence noire et joue alors avantageusement un rôle de « corps noir » à émissivité proche de 1 permettant la récupération et le stockage de la chaleur résiduelle transmise par la tôle.

Selon une seconde forme de réalisation non comprise dans la portée des revendications, le composant isolant thermique est constitué d'une nappe de film en matière synthétique à bulles d'air et d'un film de polyester soudé à chaud dessus, la nappe de film étant interposée entre la tôle et le film polyester.

Selon une troisième forme de réalisation qui est de l'invention, le composant isolant thermique est constitué d'une mousse de polyéthylène à haute densité et d'un film de polyester soudé à chaud dessus, la mousse étant interposée entre la tôle et le film polyester.

La tôle est une tôle ondulée ou nervurée de telle sorte que le composant isolant n'est assemblé sous la face interne de la tôle déjà ondulée ou nervurée, à l'aide d'une masse adhésive, de manière avantageuse qu'au sommet des nervures ou ondulations, de sorte que des canaux de circulation d'air sont formés par lesquels s'effectue une ventilation naturelle permettant ainsi une élimination de la chaleur accumulée et évitant un trop important stockage de celle-ci au niveau de la mousse par exemple.

De préférence, la mousse de polyéthylène utilisée est une mousse ignifugée au sel d'oxyde d'antimoine permettant d'obtenir un effet non propagateur de flamme ou auto extinguible, permettant ainsi un classement de réaction au feu du type Ml selon la norme pour la France et du type BS3DO selon la norme de la CEE.

De manière également avantageuse, lorsque le composant isolant thermique est constitué d'une nappe de film en matière synthétique à bulles d'air et d'un film de polyester soudé à chaud dessus ou d'une mousse de polyéthylène à haute densité et d'un film de polyester soudé à chaud dessus, ledit composant isolant s'étend sur la tôle ondulée ou nervurée, à l'aide d'une masse adhésive, sur toute la surface de celle-ci.

La masse adhésive peut être une masse auto-adhésive à base de résine thermofusible autoadhésive à base de caoutchouc synthétique et de préférence sans solvant.

De préférence, cette masse auto-adhésive est protégée par une pellicule de papier siliconé, de préférence une face de grammage 60 g/m².

En variante, cette masse autoadhésive peut également être constituée d'un adhésif acrylique en solution aqueuse modifiée, qui présente une adhérence immédiate importante pour réaliser un assemblage efficace même sur une tôle froide (inférieure à 10°C). Une telle masse adhésive sera de préférence enduite sur le composant isolant au moins thermique et protégée par un film de protection en polyéthylène par exemple de 50µ d'épaisseur et pourvu de silicone sur la face de contact.

Le procédé de fabrication d'un matériau de revêtement pour bâtiment, isolant phonique et thermique, selon l'invention consiste à assembler le composant isolant thermique et éventuellement phonique selon l'invention destiné à la fabrication dudit matériau de revêtement, à une tôle à l'aide d'une masse adhésive, ce qui permet une application par laminage sur la tôle.

On peut bien entendu envisager de réaliser le matériau de revêtement selon la revendication 6.

En particulier lorsque le composant isolant est une mousse, pourvue d'un film polyester, on prévoit d'assembler le composant sur une tôle plane puis de profiler ledit matériau plan ainsi formé. On obtient ainsi une couche de composant isolant qui suit toutes les ondulations ou nervures formées par le profilage.

Un matériau de revêtement selon l'invention peut ainsi servir, de manière avantageuse, directement au revêtement de toiture et présente de bonnes qualités isolantes thermiques et également phoniques, mais il peut également être utilisé en tant que revêtement de parois ou bardage.

De manière avantageuse, également, il est possible de prévoir que le matériau de revêtement selon l'invention présente au moins une rive pourvue d'un adhésif de jointage débordant. Cette rive pourvue de l'adhésif de jointage permet de raccorder le matériau sous forme de laie à la laie adjacente. Cette bande d'adhésif de jointage est de préférence protégée par un film protecteur de polyéthylène siliconé que l'on retire lors de l'assemblage.

On décrira maintenant l'invention plus en détail en référence au dessin dans lequel :
- La figure 1 représente un matériau de revêtement de bâtiment selon un premier exemple de réalisation;
- La figure 2 représente un matériau de revêtement de bâtiment selon un deuxième exemple de réalisation;
- La figure 3 représente un matériau de revêtement de bâtiment selon un troisième exemple de réalisation;
- La figure 4 représente un matériau de revêtement de bâtiment selon un quatrième exemple de réalisation;
- La figure 5 représente un composant isolant selon un exemple et
- La figure 6 représente un composant isolant selon un exemple de l'invention.

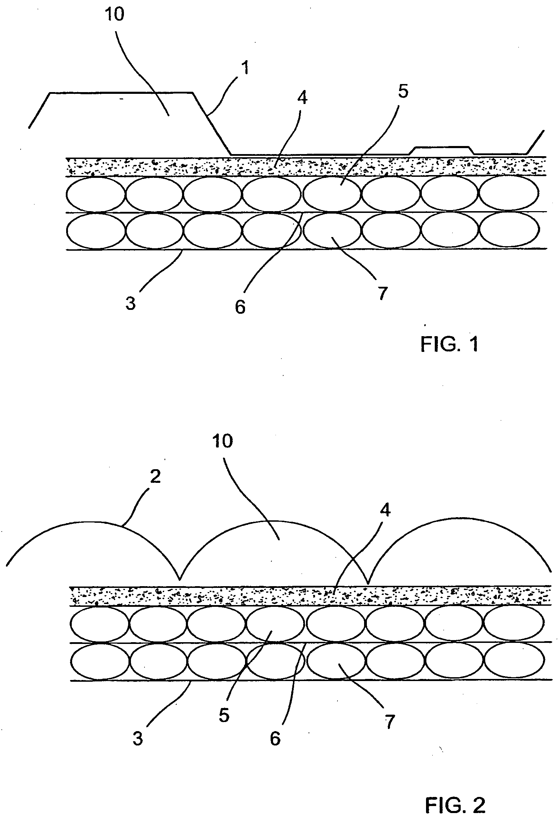

Les exemples de réalisation représentés dans les figures 1 à 5 ne sont pas couverts par le texte des revendications mais sont considérés comme utiles à la compréhension de l'invention.

Les exemples de réalisation du matériau de revêtement de bâtiment représentés aux figures 1 et 2 ne différent l'un de l'autre que par la forme de la tôle utilisée.

Ainsi à la figure 1 on a utilisé une tôle 1 nervurée tandis qu'à la figure 2 la tôle 2 est une tôle ondulée.

Le matériau de revêtement selon l'invention se présente donc sous forme d'un matériau composite dont la couche extérieure est constituée de la tôle nervurée 1 ou ondulée 2 à laquelle est assemblée un composant isolant.

Ce composant isolant thermique comporte une couche continue d'aluminium 3 qui constitue la couche intérieure du matériau. Cette couche d'aluminium 3 est de préférence laquée afin de la protéger contre la corrosion.

Entre ces couches extérieure et intérieure, on trouve dans l'ordre de l'extérieur vers l'intérieur, une couche de mousse 4 de polyéthylène noire, une première nappe de film 5 de matière synthétique à bulles d'air, une couche continue d'aluminium 6, puis de nouveau une nappe de film 7 en matière synthétique à bulles d'air.

De préférence, l'épaisseur de la mousse 4 est de 3 mm et d'une densité de densité 35 kg/m³. On peut également prévoir une densité de mousse de 85 kg/m³ améliorant ainsi encore plus l'affaiblissement du bruit d'impact de la pluie sur le matériau de revêtement ainsi formé.

De préférence dans ces deux exemples représentés, la première nappe 5 est une nappe de film à bulles d'air en polyéthylène haute densité HD, d'une épaisseur de 180 µ, les cellules de polyéthylène ayant un diamètre de 18 mm. Une telle nappe 5 définit une lame d'air inerte de lambda 0,023 de 6 mm d'épaisseur.

La couche continue d'aluminium 6 est de préférence constituée d'une feuille d'aluminium pur à 99% de 8 µ d'épaisseur, poli sur une face et laqué sur l'autre afin d'être protégée de la corrosion. Elle bénéficie ainsi d'une émissivité d'environ 0,3.

La seconde nappe de film 7 en polyéthylène HD est identique à la nappe de film 5 tandis que la couche d'aluminium extérieure est constituée d'une feuille d'aluminium de 30 µ d'épaisseur, polie sur une face et laquée sur l'autre pour la protéger de la corrosion, d'une émissivité d'environ 0,095.

La mousse 4 est soudée à chaud sur la nappe de film en polyéthylène HD 5 qui elle-même est soudée à chaud à la couche d'aluminium 6, elle-même soudée à chaud à la seconde nappe 7, soudée à chaud à la couche d'aluminium extérieure. Ce composant isolant ainsi formé est ensuite assemblé par laminage sur la tôle 1 ou 2 à l'aide d'une masse auto-adhésive à base de matière thermoplastique tel que le caoutchouc et sans solvant. Cet assemblage n'est réalisé qu'au sommet des ondulations ou nervures de la tôle 1 ou 2 de sorte que des canaux de circulation d'air C sont formés par lesquels s'effectue une ventilation naturelle permettant ainsi une élimination de la chaleur accumulée et évitant un trop important stockage de celle-ci au niveau de la mousse par exemple.

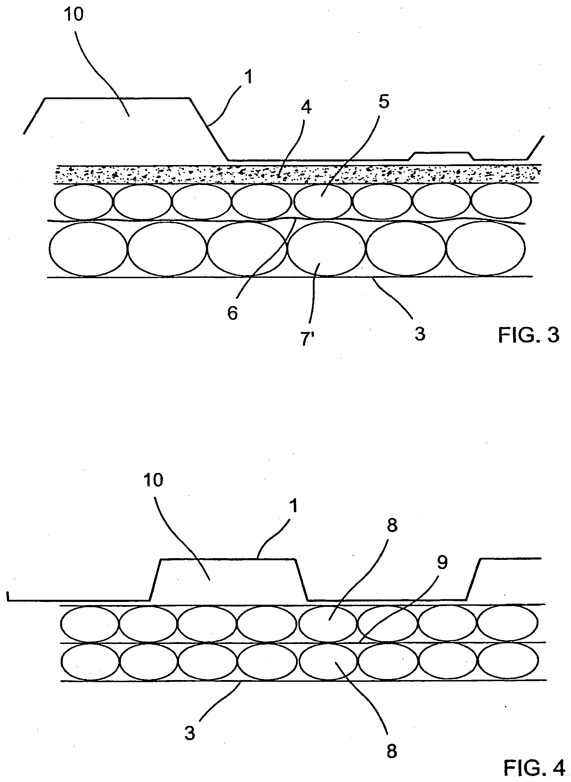

Dans l'exemple représenté à la figure 3, la seconde nappe de film 7' en polyéthylène HD présente des cellules de 30 mm de diamètre améliorant l'isolation thermique.

A la figure 4, on a représenté un matériau de revêtement isolant thermique uniquement. Un tel matériau de revêtement est en particulier indiqué pour réaliser des bardages pour lesquels l'isolation phonique est moins importante.

Ainsi, entre la tôle nervurée 1 et la couche d'aluminium extérieur 3, on a interposé deux nappes de film 8 en polyéthylène HD de 150 µ, une couche d'aluminium 9 étant interposée entre elles.

Ces nappes 8 de bulles d'air sont constituées de cellules de 10 mm de diamètre et ont une épaisseur de 4 mm. La couche d'aluminium 9 intercalée entre elles est une feuille d'aluminium de 8 µ d'épaisseur, polie sur une face et laquée sur l'autre afin d'être protégée de la corrosion tandis que la couche d'aluminium extérieure est constituée d'une feuille d'aluminium de 30 µ d'épaisseur, polie sur une face et laquée sur l'autre pour la protéger de la corrosion.

La première nappe de film en polyéthylène HD 8 est soudée à chaud à la couche d'aluminium 9, elle-même soudée à chaud à la seconde nappe 8, soudée à chaud à la couche d'aluminium extérieure 3. Ce composant isolant ainsi formé est ensuite assemblé par laminage sur la tôle 1 à l'aide d'une masse auto-adhésive à base de résine thermofusible autoadhésive à base de caoutchouc synthétique et de préférence sans solvant. Cette masse autoadhésive présente un bon pouvoir mouillant à la température d'application et une très bonne tenue à la température.

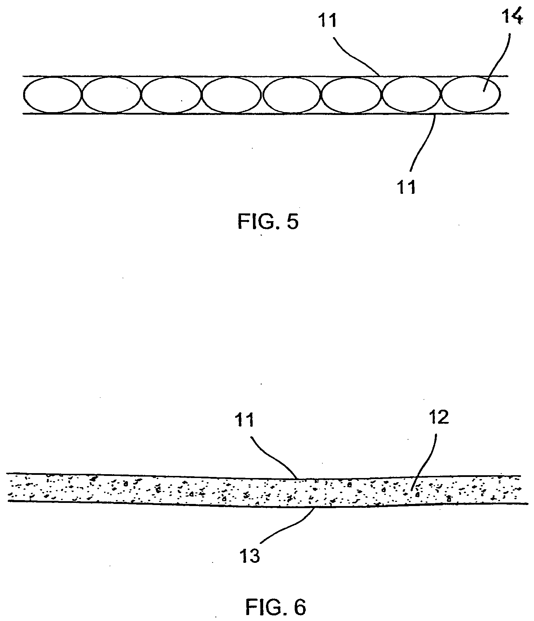

Comme on peut le voir à la figure 5, le composant isolant pour former le matériau est constitué d'une nappe 14 de film à bulles d'air en polyéthylène HD de 150 microns, par exemple, sur une face de laquelle est soudé à chaud un film de polyester 11 de 23 microns par exemple. Un tel composant est ensuite assemblé à l'aide d'une masse auto-adhésive à base de résine thermofusible autoadhésive M à base de caoutchouc synthétique et de préférence sans solvant sur une plaque de tôle destinée à former la tôle ondulée ou nervurée par profilage. Un tel composant isolant est profilable en même temps que la plaque de tôle pour former le matériau de revêtement selon l'invention.

A la figure 6 est représentée une forme de réalisation selon l'invention, dans laquelle le composant isolant est constitué d'une couche de mousse 12 de polyéthylène de densité 50 kg/m³ et d'une épaisseur de 3,5 mm par exemple, recouverte sur une face d'un film de polyester 13. Un tel composant est ensuite assemblé à l'aide d'une masse auto-adhésive M à base de résine thermofusible autoadhésive à base de caoutchouc synthétique et de préférence sans solvant sur une plaque de tôle destinée à former la tôle ondulée ou nervurée par profilage.

L'invention n'est bien entendu pas limitée aux exemples décrits qui ne sont en rien limitatifs mais englobe toutes les variantes prévues dans la portée des revendications.

## Revendications

1. Matériau de revêtement pour bâtiment, au moins isolant thermique se présentant sous la forme d'un matériau composite,
**caractérisé en ce qu'**il est constitué d'une tôle (1, 2) en tant que couche extérieure, ondulée ou nervurée, de revêtement de bâtiment, en particulier pour toiture, bardage, sur laquelle est fixée au moins une couche d'un composant isolant thermique, ledit composant isolant thermique étant constitué :
- d'au moins une mousse de polyéthylène à haute densité (12) et,
- d'un film de polyester (11, 13) ; ledit film étant soudé à chaud sur ladite mousse (12), ladite mousse (12) étant interposée entre la tôle (1,2) et ledit film (11, 13).

2. Matériau de revêtement selon la revendication 1, **caractérisé en ce que** la tôle (1, 2) est une tôle ondulée ou nervurée de telle sorte que, lorsque la mousse (4) est assemblée sous la face interne de la tôle (1, 2), elle n'est assemblée à celle-ci à l'aide d'une masse adhésive, qu'au sommet des nervures ou ondulations, de sorte que des canaux de circulation d'air (C) sont formés par lesquels s'effectue une ventilation naturelle.

3. Matériau de revêtement selon l'une quelconque des revendications précédentes, **caractérisé en ce que** le composant isolant s'étend sur la tôle ondulée ou nervurée, à l'aide d'une masse adhésive (M), sur toute la surface de celle-ci.

4. Matériau selon l'une des revendications 2 et 3, **caractérisé en ce que** la masse adhésive (M) est une masse autoadhésive constituée d'une résine thermofusible autoadhésive à base de caoutchouc synthétique, sans solvant.

5. Matériau selon l'une des revendications 2 et 3, **caractérisé en ce que** la masse adhésive (M) est une masse autoadhésive constituée d'un adhésif acrylique en solution aqueuse.

6. Procédé de fabrication d'un matériau de revêtement pour bâtiment, isolant phonique et thermique, selon l'une quelconque des revendications 1 à 5, **caractérisé en ce qu'**on prévoit d'assembler le composant isolant à l'aide d'une masse autoadhésive (M) sur une tôle plane puis de profiler ledit matériau plan ainsi formé.

## Patentansprüche

1. Beschichtungswerkstoff für ein Gebäude, das mindestens wärmedämmend ist, das sich in Form eines Verbundwerkstoffs darstellt,
**dadurch gekennzeichnet, dass** es aus einem welligen oder geriffelten Blech (1, 2) als Außenschicht einer Gebäudebeschichtung, insbesondere für Dach, Fassadenverkleidung besteht, auf dem mindestens eine Schicht einer Wärmedämmkomponente fixiert ist, wobei die Wärmedämmkomponente aus Folgendem besteht:
- mindestens einem hochdichten Polyethylenschaumstoff (12) und,
- einer Polyesterfolie (11, 13); wobei die Folie auf dem Schaumstoff (12) heiß verschweißt ist, wobei der Schaumstoff (12) zwischen dem Blech (1, 2) und der Folie (11, 13) eingelegt ist.

2. Beschichtungswerkstoff nach Anspruch 1, **dadurch gekennzeichnet, dass** das Blech (1, 2) ein gewelltes oder geriffeltes Blech ist, sodass, wenn der Schaumstoff (4) unter der Innenseite des Blechs (1, 2) zusammengefügt wird, sie nur an der Spitze der Riffeln oder Wellen mithilfe einer Klebemasse zusammengefügt wird, sodass Luftzirkulationskanäle (C) gebildet werden, durch die eine natürliche Belüftung erfolgt.

3. Beschichtungswerkstoff nach einem der vorstehenden Ansprüche, **dadurch gekennzeichnet, dass** sich die Dämmkomponente mithilfe einer Klebemasse (M) über die gesamte Oberfläche des gewellten oder geriffelten Blechs erstreckt.

4. Werkstoff nach einem der Ansprüche 2 und 3, **dadurch gekennzeichnet, dass** die Klebemasse (M) eine selbstklebende Masse ist, die aus einem selbstklebenden Schmelzharz auf Basis von synthetischem Kautschuk, ohne Lösungsmittel, besteht.

5. Werkstoff nach einem der Ansprüche 2 und 3, **dadurch gekennzeichnet, dass** die Klebemasse (M) eine selbstklebende Masse ist, die aus einem Acrylkleber in wässriger Lösung besteht.

6. Verfahren zur Herstellung eines schall- und wärmedämmenden Beschichtungswerkstoffs für ein Gebäude nach einem der Ansprüche 1 bis 5, **dadurch gekennzeichnet, dass** vorgesehen ist, die Dämmkomponente mithilfe einer selbstklebenden Masse (M) auf einem flachen Blech zusammenzufügen, und anschließend den so gebildeten flache Werkstoff zu profilieren.

## Claims

1. Building cladding material, at least thermally insulating in the form of a composite material,
**characterised in that** it consists of a metal sheet (1, 2) as an outer, corrugated or ribbed, layer of building cladding, in particular for roofing or shingling, to which at least one layer of a thermally insulating component is attached, said thermally insulating component being composed of:
- at least one high density polyethylene foam (12), and
- a polyester film (11, 13); said film being hot-welded onto said foam (12), said foam (12) being interposed between the metal sheet (1, 2) and said film (11, 13).

2. Cladding material according to claim 1, **characterised in that** the metal sheet (1, 2) is a corrugated or ribbed metal sheet such that, when the foam (4) is assembled under the inner face of the metal sheet (1, 2), it is assembled to it , using an adhesive mass, only at the top of the ribs or corrugations, so that air circulation channels (C) are formed through which natural ventilation takes place.

3. Cladding material according to any one of the preceding claims, **characterised in that** the insulating component extends over the corrugated or ribbed metal sheet, using an adhesive mass (M), over the entire surface thereof.

4. Material according to one of claims 2 and 3, **characterised in that** the adhesive mass (M) is a self-adhesive mass consisting of a self-adhesive hot melt resin based on synthetic rubber, without solvent.

5. Material according to one of claims 2 and 3, **characterised in that** the adhesive mass (M) is a self-adhesive mass consisting of an acrylic adhesive in an aqueous solution.

6. Method for manufacturing a building cladding material, sound and thermally insulating, according to any one of claims 1 to 5, **characterised in that** provision is made for assembling the insulating component using a self-adhesive mass (M) on a flat sheet and then for profiling said flat material thus formed.
